# EUROPÄISCHE PATENTSCHRIFT

(11) **EP 3 992 029 B1**
(45) Veröffentlichungstag und Bekanntmachung des Hinweises auf die Patenterteilung: **13.03.2024**
(21) Anmeldenummer: 20204442.6
(22) Anmeldetag: 28.10.2020
(51) Int. Cl.: B60P 3/34

(54) **FAHRZEUG MIT EINEM AUSFAHRBAREN RAUMBEREICH SOWIE AUSFAHRMODUL UND BESCHLAG HIERFÜR**
VEHICLE WITH AN EXTENDABLE SPATIAL AREA AND EXTENSION MODULE AND FITTING FOR SAME
VÉHICULE POURVU DE ZONE COMPARTIMENT EXTENSIBLE AINSI QUE MODULE D'EXTENSION ET FERRURE ASSOCIÉE

(43) Veröffentlichungstag der Anmeldung: 04.05.2022
(73) Patentinhaber: P.H.M. Blom Holding B.V., 2153 GE Nieuw-Vennep (NL); Helmling Holding B.V., 2153 GE Nieuw-Vennep (NL)
(72) Erfinder: Grooters, Frank Paul, 1171 DS Badhoevedorp (NL)
(74) Vertreter: Witte, Weller und Partner Patentanwälte mbB Stuttgart

(56) Entgegenhaltungen:
- DE-A1- 3 604 456
- DE-U1- 9 200 868
- US-A- 5 366 266
- US-A- 5 983 576
- US-A1- 2003 080 576

## Beschreibung

### ANWENDUNGSGEBIET UND STAND DER TECHNIK

Die Erfindung betrifft ein Ausfahrmodul zur Vergrößerung eines Innenraums eines Fahrzeugs durch partielle Verlagerung einer den Innenraum begrenzenden Außenwand. Die Erfindung betrifft darüber hinaus ein Fahrzeug mit einem solchen Ausfahrmodul sowie einen Scheren beschlag für ein solches Ausfahrmodul.

Gattungsgemäße Ausfahrmodule sind aus dem Stand derTechnik bekannt. Sie finden insbesondere bei Wohnmobilen Verwendung, können jedoch auch bei anderen Fahrzeugen Verwendung finden, wie beispielsweise einem Caravan-Anhänger, einem Lastkraftwagen oder einem Hausboot.

Ein gattungsgemäßes Ausfahrmodul umfasst einen Ausfahrkasten, der eine Stirnwand und vier Seitenwände aufweist. Die Stirnwand bildet einen verlagerbaren Wandabschnitt einer den Innenraum begrenzenden Außenwand des Fahrzeugs und insbesondere einer einen Wohn- oder Schlafraum begrenzenden Außenwand. Dieser Ausfahrkasten ist in einer Aussparung eines ortsfesten Wandabschnitts der genannten Außenwand vorgesehen.

Der Ausfahrkasten ist mittels eines Ausfahrsystems in einer Ausfahrrichtung zwischen einer Staustellung und einer Nutzstellung verlagerbar. In der Staustellung bildet die genannte Stirnwand einen bündigen Teilabschnitt der Außenwand. In der Nutzstellung ist die Stirnwand in einer Ausfahrrichtung ausgefahren, so dass der Innenraum hierdurch vergrößert ist. Die Seitenwände, die zuvor im Innenraum angeordnet waren, sind in der Nutzstellung zumindest abschnittsweise Teil der Außenwand.

Die Vergrößerung des Innenraums durch ein gattungsgemäßesAusfahrmodul dient dem Zweck, den Innenraum zu vergrößern und somit bequemer im Innenraum leben und schlafen zu können. Der Ausfahrkasten kann zu diesem Zweck insbesondere mit Küchengeräten und/oder mit Sitz- oder Liegemöbelstücken ausgestattet sein. Üblicherweise kann der Innenbereich des Ausfahrkastens auch in der Staustellung bestimmungsgemäß genutzt werden. Durch Überführung des Ausfahrkastens in die Nutzstellung wird die Nutzungjedoch bequemer.

Gattungsgemäße Ausfahrmodule werden üblicherweise motorisch über einen Elektromotor oder hydraulisch zwischen der Staustellung und der Nutzstellung verlagert. Aus dem Stand der Technik sind viele Systeme hierfür bekannt. Üblicherweise sind diese Systeme derart ausgestaltet, dass Beschlagsteile, wie beispielsweise Zahnstangen derart am Kasten angeordnet sind, dass sie in der Nutzstellung außenseitig der Außenwand angeordnet sind und somit der Witterung ausgesetzt sind. Dies bringt verschiedene Probleme mit sich, insbesondere eine relevante Verletzungsgefahr sowie ein erhöhter Verschleiß, insbesondere auch bedingt durch Feuchtigkeit, die durch die Aussparung in der Außenwand eindringen kann und anschließend auch im Stauzustand mechanische Komponenten beschädigen kann.

Aus den Dokumenten US 2003/0080576 A1, US 5,983,576 A und US 5,366,266 A sind Fahrzeuge mit ausfahrbaren Elementen mit Scherenmechanik bekannt. Aus der DE 3604456 A1 ist eine Scherenhebebühne mit einem Startaktor bekannt.

### AUFGABE UND LÖSUNG

Aufgabe der Erfindung ist es, ein Ausfahrmodul zur Verfügung zu stellen, welches bauartbedingt gut dem Eindringen von Feuchtigkeit entgegenwirkt. Aufgabe ist es weiterhin, ein entsprechendes Fahrzeug mit einem solchen Ausfahrmodul sowie einen vorteilhaften Beschlag für ein solches Ausfahrmodul zurVerfügungzu stellen.

Ein erfindungsgemäßes Ausfahrmodul weist die eingangs genannten Merkmale eines gattungsgemäßen Ausfahrmoduls auf. Es umfasst also einen Ausfahrkasten mit Stirnwand und Seitenwänden sowie ein Ausfahrsystem, mittels dessen der Ausfahrkasten in einer Ausfahrrichtung zwischen einer Staustellung und einer Nutzstellung verlagerbar ist, so dass in einer Staustellung der verlagerbare Wandabschnitt mit dem umgebenden ortsfesten Wandabschnitt eine im Wesentlichen bündige Fläche bildet und die Seitenwände im Innenraum angeordnet sind und dass in einer Nutzstellung der verlagerbare Wandabschnitt in Ausfahrrichtung gegenüber dem ortsfesten Wandabschnitt ausgefahren ist und die Seitenwände einen Teil der Außenwand bilden.

Der Ausfahrkasten, der im eingebauten Zustand vorzugsweise vertikal oder horizontal verfahrbar ist, vergrößert den Innenraum, wobei vorzugsweise vorgesehen ist, dass der Innenraum sowohl im eingefahrenen als auch im ausgefahrenen Zustand verwendbar ist. Allerdings steht im ausgefahrenen Nutzzustand mehr Raum und insbesondere mehr Fußbodenfläche zur Verfügung. Der Ausfahrkasten weist für den Fall horizontaler Ausfahrbarkeit und bezogen auf einen installierten Zustand vorzugsweise eine Höhe von mindestens 1,50 m auf, insbesondere von mindestens 1,8m auf, so dass man darin stehen kann. Üblicherweise liegt die Bauhöhe maximal bei 2,50 m. Die Länge des Ausfahrkastens hängt vom verfügbaren Platz ab. Eine Länge in horizontaler Richtung und quer zur Ausfahrrichtungvon zwischen 1,00 m und 5,00 m ist üblich.

Der Ausfahrkasten muss keine exakt oder weitgehend quaderförmige Außenform aufweisen, sondern kann hiervon auch abweichen. Dies kann beispielsweise zweckmäßig sein, wenn der Ausfahrkasten an Radkästen oder dergleichen des Fahrzeugs angepasst ist.

Zum erfindungsgemäßen Ausfahrmodul wird vorgeschlagen, dass in einem Innenbereich mindestens ein Scherenbeschlag vorgesehen ist, wobei in der Praxis vorzugsweise mindestens zwei getrennte Scherenbeschläge im Bereich gegenüberliegender Seitenwände vorgesehen sein sollten.

Ein Scherenbeschlag der vorgeschlagenen Art weist einen ersten Befestigungsabschnitt zur Anbringung am Ausfahrkasten und einen gegenüberliegenden zweiten Befestigungsabschnitt zur ortsfesten Anbringung relativ zum ortsfesten Wandabschnitt der Außenwand auf. Ein solcher Befestigungsabschnitt weist vorzugsweise eine mittels Schrauben oder Nieten befestigte Grundplatte oder einen Profilabschnitt auf, an der dazu bewegliche Elemente des Scherenbeschlages vorgesehen sind. Im bevorzugten Falle seitlicher Anordnung der Scherenbeschläge weisen die Befestigungsabschnitte vorzugsweise eine vertikale Haupterstreckungsrichtung auf.

Zwischen diesen Befestigungsabschnitten sind zwei gelenkig miteinander verbundene Schwenkhebel vorgesehen. Diese sind mit einem Ende schwenkbar an einem der Befestigungsabschnitte angebracht, insbesondere jeweils ein Schwenkhebel an jedem der beiden Befestigungsabschnitte. Das gegenüberliegende Ende mindestens eines der Schwenkhebel ist ebenfalls schwenkbar und zusätzlich translativ, vorzugsweise linear, am gegenüberliegenden Befestigungsabschnitt geführt. Vorzugsweise sind die gegenüberliegenden Enden beider Schwenkhebel jeweils am anderen Befestigungsabschnitt translativ geführt, so dass sich eine grundsätzlich symmetrische Ausgestaltung ergibt.

Ein solcher Scherenbeschlag gestattet es durch Verlagerung des translativ geführten Endes des einen Schwenkhebels gegenüber dem schwenkbar am gleichen Befestigungsabschnitt angebrachten Endes des anderen Schwenkhebels den gegenüberliegenden Befestigungsabschnitt anzunähern oder zu beabstanden und dadurch den Ausfahrkasten auszufahren und wieder einzufahren. Erstrecken sich beide Schwenkhebel von einem der Befestigungsabschnitte zum anderen Befestigungsabschnitt, so können die Schwenkhebel eine Parallelverlagerung der Stirnwand gewährleisten und verhindern ein Verkippen. Eine zusätzliche Führung für den Ausfahrkasten kann durch die Eigenstabilität solcher Scherenbeschläge vergleichsweise unaufwändig ausfallen.

Grundsätzlich ist es jedoch von Vorteil, wenn das Ausfahrmodul zusätzlich durch eine Führungseinrichtung geführt ist, insbesondere umfassend Rollenkörper, die beispielsweise in Schienen geführt sind. Allerdings kann bei ausreichend robuster Gestaltung der Scherenbeschläge hierauf je nach Ausgestaltung auch verzichtet werden.

Es ist erfindungsgemäß vorgeschlagen, dass der mindestens eine Scherenbeschlag in einem Innenbereich angeordnet ist. Dies bedeutet, dass alle Scherenbeschlagsteile unabhängig von der Stellung des Ausfahrkastens innenseitig des ortsfesten Wandabschnitts angeordnet sind. Ein Scherenbeschlag kann sehr kompakt ausgebildet sein. Hierdurch lässt sich der Scherenbeschlag gut im Innenbereich anordnen.

Der mindestens eine Scherenbeschlag ist zwischen einer Innenseite des ortsfesten Wandabschnitts einerseits und dem Ausfahrkasten, insbesondere dessen der Stirnwand abgewandten inneren Ende, andererseits angeordnet, so dass der Ausfahrkasten durch eine die Befestigungsabschnitte aufeinander zu kraftbeaufschlagende Kraft in seine Nutzstellung überführbar ist.

Erfindungsgemäß ist bei einem erfindungsgemäßen Ausfahrmodul somit eine Anordnung des Scherenbeschlags vorgesehen, bei der ein Einfahren des Scherenbeschlages, also eine Verringerung des Winkels zwischen dem Befestigungsabschnitt und der Ausrichtung des Schwenkhebels, eine Annäherung der Befestigungsabschnitte und ein Ausfahren des Ausfahrkastens bewirkt. Entsprechend bewirkt ein Ausfahren des Scherenbeschlages, also eine Vergrößerung des Winkels zwischen dem Befestigungsabschnitt und der Ausrichtung des Schwenkhebels, ein Einfahren des Ausfahrkastens.

Hierdurch kann der Scherenbeschlag vollständig in einem Innenbereich vorgesehen sein, also in einem Trockenbereich, der vor Witterung geschützt ist und in den Flüssigkeit von außen nicht oder nur in geringen Mengen gelangen kann. Insbesondere gestattet es die beschriebene Anordnung des Scherenbeschlages zwischen dem Ausfahrkasten und der Innenseite des ortsfesten Wandabschnitts, eine umlaufende Dichtungseinrichtung zur Anbringung an der Aussparung und zur gleitenden Anlage an den Seitenwände des Ausfahrkastens vorzusehen, die keinerlei Unterbrechung zum Herausführen von Teilen des Scherenbeschlages bieten muss. Dadurch kann diese Dichtungseinrichtung, die insbesondere vorzugsweise als umlaufendes Dichtungsprofil oder als Gummilippe ausgebildet ist, zuverlässig einen außenliegenden Nassbereich von einem innenliegende Trockenbereich trennen.

Die beschriebenen Befestigungsabschnitte sowie Schwenkhebel sind vorzugsweise vollständig im Trockenbereich angeordnet. Erhöhte Korrosion aufgrund des Kontaktes mit Regenwasser ist daher im Normalfall nicht zu befürchten.

Der mindestens eine Scherenbeschlag wird vorzugsweise mittels eines elektrischen Aktors oder eines Hydraulikaktors angetrieben. Insbesondere vorzugweise weist der mindestens eine Scherenbeschlag zwei Aktoren auf, wie im Weiteren noch erläutert sind.

Erfindungsgemäß weist der Scherenbeschlag mindestens einen Hauptaktor auf, der auf mindestens ein translativ geführtes Ende mindestens eines Schwenkhebels wirkt. Dieser Aktor ist vorzugsweise als längenverländerlicher Aktor ausgebildet und in Haupterstreckungsrichtung des Befestigungsabschnitts ausgerichtet, also in jener Richtung, die sich zwischen den beiden Enden der am Befestigungsabschnitt schwenkbar bzw. translativ beweglich angebrachten Schwenkhebel erstreckt.

Insbesondere kann dieser Hauptaktor ein hydraulischer Aktor sein, der einen Hydraulikzylinder und einen darin geführten Hydraulikkolben aufweist, dessen Kolbenstange auf das translativ verfahrbare Ende des Schwenkhebels wirkt. Ein solcher Hydraulikkolben kann durch Anordnung parallel zum Befestigungsabschnitt sehr platzsparend angeordnet werden. Ähnliches kann auch durch einen elektrischen Linearaktor erreicht werden, der statt des Hydraulikaktors verwendet werden kann.

Um eine gleichmäßige und verkanntungsfreie Bewegung zu ermöglichen, kann es von Vorteil sein, zwei solche Hauptaktoren am Scherenbeschlag vorzusehen. Jeder dieser beiden Hauptaktoren wirkt bei einer solchen Gestaltung auf jeweils ein translativ bewegliches Ende jeweils eines der beiden Schwenkhebel. Auch in diesem Falle ist die Verwendung von Hydraulikaktoren bevorzugt, aber die Verwendung von anderen Aktoren, wie insbesondere elektrischen Linearaktoren, ebenfalls möglich.

Während bei einer Gestaltung mit nur einem Hauptaktorje Scherenbeschlag dieser eine Hauptaktor vorzugsweise an jenem Befestigungsabschnitt vorgesehen ist, der ortsfest zum ortsfesten Wandabschnitt angebracht ist, da hier die Versorgung des Aktors am einfachsten ist, ist bei der beschriebenen Gestaltung mit zwei Hauptaktoren erforderlich, dass Versorgungsleitungen auch zum Befestigungsabschnitt am Ausfahrkasten geführt werden. Dabei wird es bevorzugt, dass mindestens eine Versorgungsleitung entlang eines der Schwenkhebel oder in einem der Schwenkhebel geführt ist.

Zur Anordnung in einem der Schwenkhebel stellt es eine vorteilhafte Form der Realisierung dar, dass der betreffende Schwenkhebel zumindest abschnittsweise als Hohlprofil ausgebildet ist, so dass er einen Innenbereich aufweist, in dem die elektrische, hydraulische oder pneumatische Versorgungsleitung geführt sein kann.

Die Verwendung von mindestens einem Hauptaktor, dessen Haupterstreckungsrichtung im Wesentlichen mit der Haupterstreckungsrichtung des Befestigungsabschnittes übereinstimmt, ist in Hinblick auf eine platzsparende Gestaltung von Vorteil. Problematisch daran kann jedoch sein, dass die Haupterstreckungsrichtung des Hauptaktors und die Haupterstreckungsrichtung des Schwenkhebels, auf dessen Ende der Hauptaktor wirkt, bei minimaler Beabstandung der Befestigungsabschnitte im eingefahrenen Zustand des Ausfahrkastens einen sehr geringen Winkel einschließen. Beim Einfahren des Ausfahrkastens wirkt der Hauptaktor bzw. wirken die beiden Hauptaktoren daher in einem sehr ungünstigen Winkel auf ihre jeweiligen Schwenkhebel. Um dennoch den Ausfahrkasten einfahren zu können, braucht es besonders starke Aktoren, die jedoch mit höheren Kosten einhergehen.

Erfindungsgemäß weist der mindestens eine Scherenbeschlag eines erfindungsgemäßen Ausfahrmoduls daher zusätzlich mindestens einen Startaktor auf, der auf mindestens einen der Schwenkhebel derart wirken kann, dass die Befestigungsabschnitte ausgehend von einem minimal beabstandeten Zustand voneinander weg kraftbeaufschlagt werden.

Ein solcher Startaktor unterstützt bestimmungsgemäß die Bewegung der Schwenkhebel zu Beginn der Einfahrbewegung. Er tut dies insbesondere, indem er abweichend vom Hauptaktor nicht linear auf das translativ verlagerbare Ende eines Schwenkhebels wirkt, sondern vorzugsweise auf einen Mittelbereich eines Schwenkhebels oder beider Schwenkhebel und/oder durch eine rotative Bewegung.

Insbesondere vorteilhaft ist eine Gestaltung, bei der der Startaktor eine schwenkbewegliche Führung aufweist, in der ein an einem Schwenkhebel oder beiden Schwenkhebeln angeordneter Führungsgleiter beweglich geführt ist. Die schwenkbewegliche Führung ist vorzugsweise an einer Führungshülse vorgesehen, die schwenkbar an einem der Befestigungsabschnitte angebracht ist und mittels eines hydraulischen oder elektrischen Aktors verschwenkbar ist. Dabei kann der Aktor unmittelbar zur Erzeugung der Schwenkbewegung ausgebildet sein, beispielsweise als klassischer Elektromotor mit einem drehbaren Rotor. Insbesondere vorzugsweise ist jedoch ein Getriebe vorgesehen, mittels dessen eine lineare Bewegung, insbesondere eines Hydraulikkolbens des Startaktors, in eine Schwenkbewegung überführt wird. Dies kann insbesondere erfolgen, indem die Führungshülse übereine außenseitige Verzahnung verfügt, die mit einer elektrisch oder hydraulisch angetriebene Zahnstange in Eingriff steht und hiervon momentenbeaufschlagt wird.

Die Führungshülse stellt vorzugsweise eine einseitig offene Führung zur Verfügung, aus der der genannte Führungsgleiter, der an mindestens einem der Schwenkhebel vorgesehen ist, während der Beabstandung der Befestigungsabschnitte entweichen kann. Der Führungsgleiter bleibt daher nur temporär in der Führung, solange die Verlagerung der Befestigungsabschnitte gegeneinander vom Startaktor unterstützt wird. In der anschließenden Phase sind der Hauptaktor oder die Hauptaktoren aufgrund der geänderten Winkelverhältnisse selbst in der Lage, die Bewegung fortzusetzen.

Werden die Befestigungsabschnitte wieder einander angenähert, insbesondere während der Überführung in den Nutzzustand des Ausfahrmoduls, so tritt der Führungsgleiter wieder in die Führung ein. In Verbindung mit einem Startaktor, der erfindundungsgemäß für bidirektionalen Betrieb ausgelegt ist, kann dies genutzt werden, um mittels des Startaktors auf dem letzten Teilstück der Bewegung die Befestigungsabschnitte wieder aneinander anzuziehen und zudem eine Sicherung im ausgefahrenen Zustand zu bilden.

Um zu gewährleisten, dass die eingefahrene Position des Ausfahrkastens exakt eingehalten wird, wird vorgeschlagen, dass eine Begrenzungseinrichtungvorgesehen, mittels derer eine maximale Betriebsbeabstandung der Befestigungsabschnitte definierbar ist. Da bei einer erfindungsgemäßen Gestaltung ein Einfahren des Ausfahrkastens durch eine Beabstandung der Befestigungsabschnitte erzielt werden kann, ist durch die Begrenzung des maximalen Abstandes die Einfahrposition definierbar.

Die Begrenzungseinrichtung kann im einfachsten Falle durch Anschläge bewirkt werden, an die der Ausfahrkasten bei der Einfahrbewegung anschlägt. Eine solche Bauweise ist allerdings aus mehreren Gründen nachteilig. Ein wesentlicher Nachteil ist, dass solche Anschläge nur schwierig an einem Ort vorzusehen sind, an dem sie bei ausgefahrenem Ausfahrkasten nicht die Nutzbarkeit des Innenraums stören. Handelt es sich beispielsweise um Anschlagsblöcke, die am Boden des Innenraums des Fahrzeuges angeordnet sind, so ist die Gefahr groß, hierüber zu stolpern.

Von Vorteil ist es daher, wenn die Begrenzungseinrichtung ein flexibles Begrenzungsband aufweist, welches vorzugsweise die Befestigungsabschnitte miteinander verbindet. Ein solches flexibles Begrenzungsband definiert durch seine Länge den maximalen Abstand der Befestigungsabschnitte oder anderer Komponenten des Scherenbeschlages zueinander. Werden die Befestigungsabschnitte einander angenähert, so wird dies durch ein flexibles Begrenzungsband nicht behindert. Insbesondere von Vorteil ist es, wenn mindestens eine Federeinrichtung vorgesehen ist, mittels derer das Begrenzungsband kraftbeaufschlagt wird. Diese Feder, die insbesondere in Art einer Schraubenfeder ausgestaltet ist, zieht das Begrenzungsband in einer definierte Stauposition, wenn die Befestigungsabschnitte einander angenähert werden. Hierdurch wird bewirkt, dass das Begrenzungsband bei angenäherten Befestigungsabschnitten nicht undefiniert im Zwischenraum zwischen den Befestigungsabschnitten verbleibt und dort möglicherweise die korrekte Funktionsweise stört, sondern definiert aufgenommen wird. Eine alternative Bauweise zu einer Schraubenzugfeder könnte beispielsweise durch eine rotativ federgespannte Aufnahmerolle definiert sein.

Insbesondere vorzugsweise ist die Feder in Richtung der Haupterstreckungsrichtung eines Befestigungsabschnitts oder in Richtung der Erstreckungsrichtung eines Schwenkhebels ausgerichtet ist. Bei einer besonders bevorzugten Gestaltung ist vorgesehen, dass zwei Begrenzungsbänder installiertsind, die jeweils mittels einer Schraubenfeder gespannt sind, wobei insbesondere vorzugsweise die beiden Schraubenfedern jeweils parallel zu einem der Schwenkhebel vorgesehen sind und entsprechend mitverschwenken. Dabei kann insbesondere vorteilhaft sein, wenn beide Schraubenfedern auf der gleichen Seite des Beschlages vorgesehen sind, so dass sich bei einer Annäherung der Befestigungsabschnitte einander ebenfalls angenähert werden. Diese Anordnung auf einer gemeinsamen Seite gestattet es, auf der gegenüberliegenden Seite beidseitig an den Befestigungsabschnitten ausreichend Bauraum für die Anordnung der Hauptaktoren zu belassen.

Besonders bevorzugt ist es, wenn die Begrenzungseinrichtung mehrere Begrenzungsbänder aufweist, die gemeinsam an unterschiedlichen Stellen die Verlagerbarkeit der Befestigungsabschnitte zueinander limitieren. Insbesondere können zwei Begrenzungsbänder an gegenüberliegenden Enden der Befestigungsabschnitte vorgesehen sein.

Das Begrenzungsband ist vorzugsweise in sich nicht oder nur geringfügig dehnbar. Insbesondere in Frage kommt ein Stahlband.

Vorzugsweise ist vorgesehen, dass die Begrenzungseinrichtung lösbar ausgebildet ist, um eine Überschreitung der maximalen Betriebsbeabstandung der Befestigungsabschnitte zu ermöglichen. Dies dient dem Zweck, dem Ausfahrkasten fallweise zu gestatten, über die im Betrieb übliche eingefahrene Stellung hinaus weiter einzufahren, so dass der Ausfahrkasten aus der Aussparung im ortsfesten Wandabschnitt nach innen herausfährt. Die so erzielbare Stellung ist insbesondere zum Zwecke der Wartung und/oder Reparatur wertvoll. Vor allem gestattet sie es, eine Dichtungseinrichtung am Rand der Aussparung auf einfache Weise austauschen zu können und gegebenenfalls auch an andere Teile einer Ausfahr- und Führungsmechanik zu Wartungs- oder Reparaturzwecken herankommen zu können. Wenn die Begrenzungseinrichtung ein flexibles Begrenzungsband aufweist, ist dieses zum Zwecke der Lösbarkeit vorzugsweise an mindestens einem Ende aushängbar, vorzugsweise werkzeuglos.

Die Erfindung betrifft weiterhin auch ein Fahrzeug mit einem Innenraum sowie mit einem Ausfahrmodul der beschriebenen Art, mittels dessen der Innenraum vergrößert werden kann.

Bei verschiedene Fahrzeugarten ist die Verwendung eines erfindungsgemäßen Ausfahrmoduls zweckmäßig. Insbesondere zweckmäßig ist die Verwendung bei Caravan-Anhängern und Wohnmobilen. Bei diesen ist üblicherweise eine bezogen auf die Fahrtrichtung seitliche Wand mit einem erfindungsgemäßen Ausfahrmodul versehen, welches links oder rechts ausfahren kann. Insbesondere vorzugsweise können auch mehrere Ausfahrmodule auf einander gegenüberliegenden Seiten vorgesehen sein. Insbesondere können die Ausfahrkästen von solchen Ausfahrmodulen die Küche oder Schlafstätten oder Sitzmöglichkeiten des Fahrzeugs aufweisen.

Neben Wohnmobilen und Caravan-Anhängern kann die Erfindung auch bei Lastkraftwagen oder Zugmaschinen von Sattelschleppern Verwendung finden. Auch hier kann vorgesehen sein, dass die Ausfahrmodule bezogen auf die Fahrtrichtung seitlich angeordnet sind und links oder rechts ausfahren können. Bei Zugmaschinen ist es jedoch insbesondere bevorzugt, dass das Ausfahrmodul an einer rückwärtigen Wand der Zugmaschine vorgesehen ist und entgegen der Fahrtrichtung in den Bereich der Sattelkupplung ausfährt. Bei Zugmaschinen ist der Ausfahrkasten vorzugsweise mit einer Schlafstätte bestückt.

Eine weitere Fahrzeugkategorie, bei der die Verwendung erfindungsgemäßer Ausfahrmodule als zweckmäßig angesehen wird, sind Boote, insbesondere Hausboote. Je nach Art des Boots bzw. Hausboots kann die Verwendung eines Ausfahrmoduls an jeder Wand eines solchen Hausboots zweckmäßig sein. Insbesondere sind jedoch auch hier Ausfahrmodule in Seitenwänden besonders zweckmäßig. Wie auch bei Caravan-Anhängern können Ausfahrmodule in Hausbooten vorzugsweise die Küche oder Schlafstätten oderSitzmöglichkeiten zur Verfügung stellen oder einen Teil derer umfassen.

Wenngleich erfindungsgemäße Ausfahrmodule vorzugsweise in Aussparungen in vertikalen Wandabschnitten vorgesehen sind und horizontal ausfahren, sind auch die Anordnung in einer Aussparung einer horizontalen Wand, insbesondere der Decke, und ein vertikales Ausfahren möglich, insbesondere nach oben zur Vergrößerung der Raumhöhe.

Neben den Ausfahrmodulen und hiermit ausgestatteten Fahrzeugen der beschriebenen Art betrifft die Erfindung auch Scherenbeschläge, die sich hierfür besonders gut eignen.

Solche Scherenbeschläge weisen in der beschriebenen Art einen ersten Befestigungsabschnitt zur Anbringung am Ausfahrkasten und einen zweiten Befestigungsabschnitt zur Anbringung ortsfest zum ortsfesten Wandabschnitt der Außenwand auf und verfügen weiterhin über mindestens zwei gelenkig verbundenen Schwenkhebel. Mindestens einer der Schwenkhebel ist schwenkbar an beiden Befestigungsabschnitten angebracht, wobei vorzugsweise ein Ende des Schwenkhebels schwenkbar und translativ verlagerbar an einem der Befestigungsabschnitte angebracht ist. Insbesondere vorzugsweise sind beide Schwenkhebel jeweils an einem der Befestigungsabschnitte rein schwenkbeweglich angebracht und am gegenüberliegenden Schwenkhebel schwenkbar und translativ beweglich entlang der Haupterstreckungsrichtung des Befestigungsabschnitts angebracht.

Ein erfindungsgemäßer Scherenbeschlag ist dabei für die bestimmungsgemäße Verwendung an einem erfindungsgemäßen Ausfahrmodul durch mindestens eine der folgenden beiden Maßnahmen angepasst.

Zum einen weist ein erfindungsgemäßer Scheren beschlag zwei Hauptaktoren auf, die jeweils auf ein Ende eines Schwenkhebels wirken und von denen hierfür jeweils einer an jedem Befestigungsabschnitt vorgesehen ist. Vorzugsweise handelt es sich um hydraulische Hauptaktoren der beschriebenen Art, aber auch elektrische Aktoren können Verwendung finden. Einer der Hauptaktoren ist am Befestigungsabschnitt des Ausfahrkastens vorgesehen. Zur Versorgung dieses Aktors mit elektrischer Energie und einem Hydraulikfluid ist mindestens eine Versorgungsleitung vorgesehen, die entlang des Schwenkhebels und insbesondere in einem lichten Querschnitt des zumindest abschnittsweise als Hohlprofil ausgebildeten Schwenkhebels vorgesehen ist.

Alternativ oder zusätzlich ist bei einem erfindungsgemäßen Scherenbeschlag vorgesehen, dass dieser mindestens einen Hauptaktor aufweist, der auf ein translativ verschiebliches Ende eines Schwenkhebels wirkt und dass mindestens ein zusätzlicher Startaktor vorgesehen ist, der auf mindestens einen der Schwenkhebel wirkt. Der Startaktor ist dabei, wie oben beschrieben, dafür ausgebildet, insbesondere zu Beginn der Einfahrbewegung, also bei noch minimal beabstandeten Befestigungsabschnitten, die Einfahrbewegung zu unterstützen.

Neben den beschriebenen Merkmalen kann ein erfindungsgemäßer Scherenbeschlag auch Merkmale, einzeln oder in Kombination, aufweisen, die in diesem Dokument im Kontext des Ausfahrmoduls zum Scherenbeschlag beschrieben sind.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind.
Fig. 1 bis4zeigen unterschiedliche Fahrzeuge, die jeweils mit einem AusfahrmodulzurVergrößerung des Innenraums ausgerüstet sind.
Fig. 5 und 6 zeigen das Ausfahrmodul in einer seitlichen und einer isometrischen Ansicht.
Fig. 7 zeigt einen Scherenbeschlag des Ausfahrmoduls.
Fig. 8A bis 8C zeigen das Ausfahrmodul in verschiedenen Stadien beim Ausfahren des Ausfahrkastens.
Fig. 9 zeigt das Ausfahrmodul in einem Wartungszustand.

### DETAILLIERTE BESCHREIBUNG DER AUSFÜHRUNGSBEISPIELE

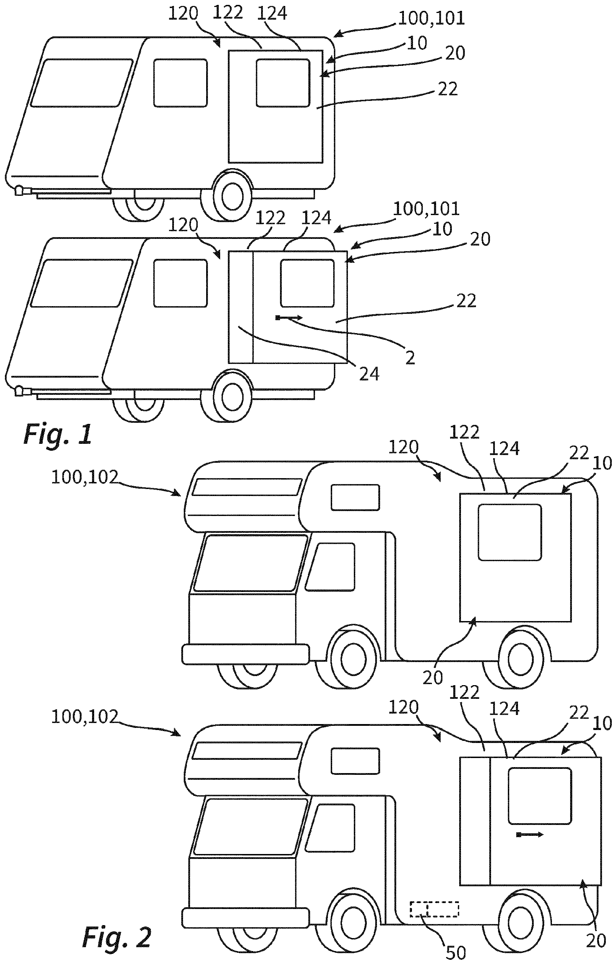

Die Fig. 1 bis 4 zeigen unterschiedliche Kategorien von Fahrzeugen 100, nämlich einen Caravan-Anhänger 101, ein Wohnmobil 102, eine Zugmaschine 103 eines Sattelschleppers sowie ein Hausboot 104.

Die dargestellten Fahrzeuge 100 verfügen jeweils über einen Innenraum. Im Falle des Caravan-Anhängers 101, des Wohnmobils 102 sowie des Hausbootes 104 sind die Innenräume insbesondere zum temporären oder auch dauerhaften Bewohnen gedacht und weisen üblicherweise eine Küche sowie Schlaf- und Sitzgelegenheiten auf. Im Falle der Zugmaschine 103 weist der Innenraum insbesondere naturgemäß das Fahrzeug-Cockpit auf, jedoch zusätzlich eine Schlafgelegenheit für den Lkw-Fahrer.

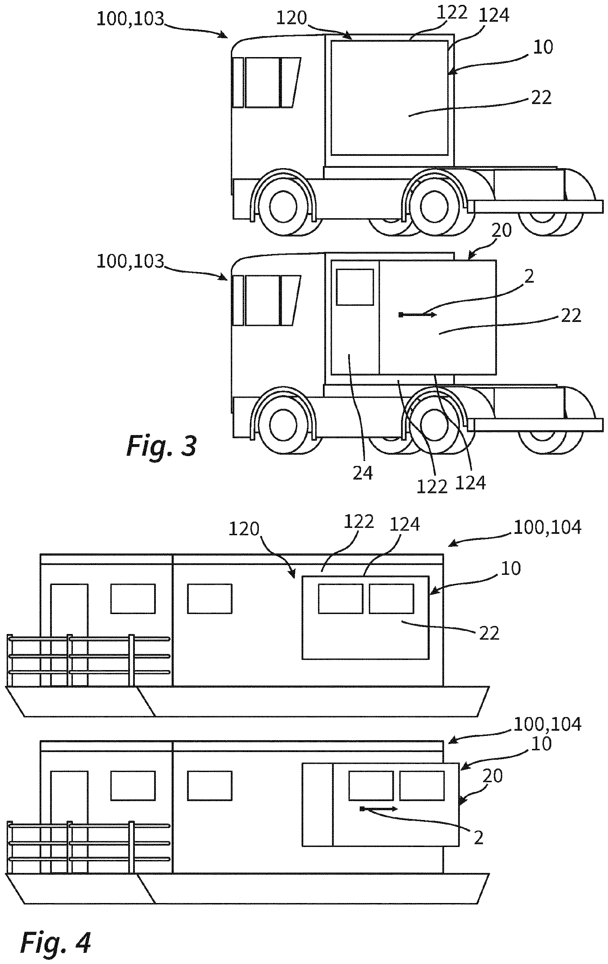

Alle Fahrzeuge 100 der Fig. 1 bis 4 weisen jeweils ein Ausfahrmodul 10 auf, welches in einer Außenwand 120 des jeweiligen Fahrzeugs 100 integriert ist. Diese Ausfahrmodule 10 weisen als Hauptbestandteil einen Ausfahrkasten 20 auf, der zwischen einer Staustellung und einer Nutzstellung verlagerbar ist. In der Staustellung, die in den Fig. 1 bis 4 jeweils in der oberen Teilfigur dargestellt ist, sind die Ausfahrkästen 20 eingefahren, so dass ihre Stirnwand 22 bündig und flach mit umgebenden ortsfesten, also nicht ausfahrbaren, Wandabschnitten 122 ausgerichtet ist. In der Nutzstellung, die in den Fig. 1 bis 4 jeweils in der unteren Teilfigur dargestellt ist, sind die Ausfahrkästen 20 in einer Ausfahrrichtung 2 ausgefahren und vergrößern dadurch den Innenraum des jeweiligen Fahrzeugs. Im Falle der dargestellten Varianten des Caravan-Anhängers 101 und des Wohnmobils 102 ist die Ausfahrrichtung orthogonal zu einer Fahrrichtung ausgerichtet. Die Ausfahrkästen 20 fahren also seitlich heraus. Im Falle der Zugmaschine 103 ist bei der dargestellten Variante vorgesehen, dass der Ausfahrkasten 20 entgegen der Fahrtrichtung auf der rückwärtigen Seite des Fahrerhauses ausfährt. Bei dem Hausboot 104 gemäß der Fig. 4 ist wiederum ein seitliches Ausfahren vorgesehen.

Allerdings sind diese Ausfahrrichtungen 2 der dargestellten Ausfahrmodule 10 nur exemplarisch zu verstehen. Alternative oder zusätzliche Ausfahrmodule 10 an den jeweiligen Fahrzeugen 100 können auch in von den dargestellten Richtungen abweichenden Richtungen ausgefahren werden. Insbesondere können erfindungsgemäße Ausfahrmodule 10 auch aus einer das Fahrzeug auf der oberen Seite begrenzenden Außenwand ausgefahren werden und dadurch die Deckenhöhe erhöhen.

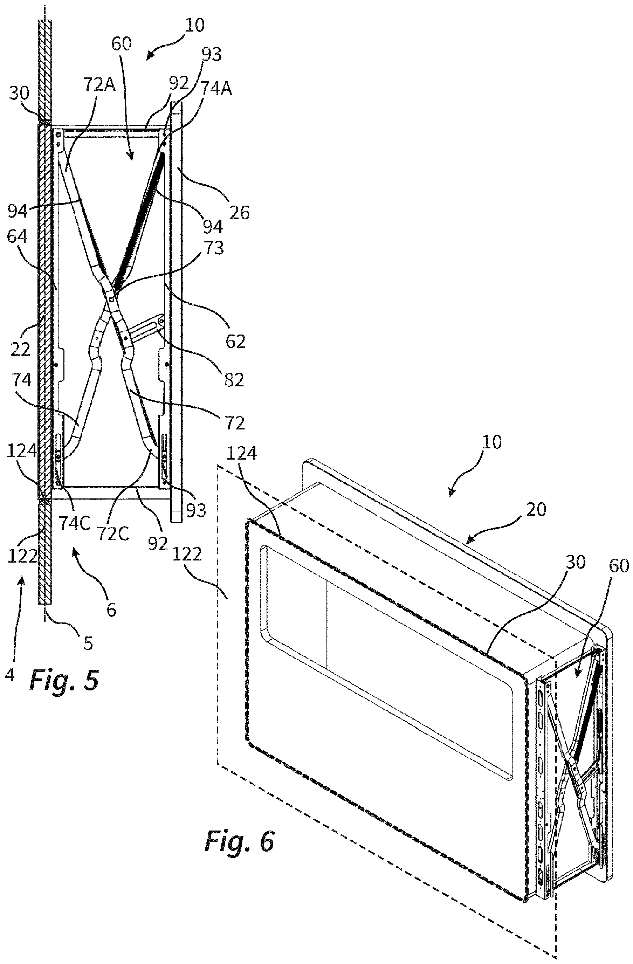

Die Fig. 5 und 6 verdeutlichen den grundsätzlichen Aufbau eines erfindungsgemäßen Ausfahrmoduls 10 exemplarisch. Dabei ist das Ausfahrmodul 10 in der Staustellung dargestellt, also eingefahren entsprechend der jeweils oberen Darstellungen in den Fig. 1 bis 4. Das Ausfahrmodul 10 ist in Fig. 5 im Bereich der Außenwand teilgeschnitten dargestellt.

Bezug nehmend auf Fig. 5 ist der ortsfester Wandabschnitt 122 der Außenwand geschnitten gezeigt, in welchem sich eine Aussparung 124 befindet. Bei üblichem Gebrauch ist der Ausfahrkasten 20 in dieser Aussparung 124 angeordnet. Ist der Ausfahrkasten 20 eingefahren, wie im Zustand der Fig. 5 und 6, so bildet eine verlagerbare Stirnwand 22 des Ausfahrkastens einen Wandabschnitt, der mit dem ortsfesten Wandabschnitt 122 der Außenwand 120 im Wesentlichen bündig ist, wie oben bereits beschrieben wurde und wie es die jeweils oberen Darstellungen in den Fig. 1 bis 4 zeigen. An der Aussparung 124 ist nach innen weisend eine umlaufende Dichtungseinrichtung 30 vorgesehen, die im dargestellten eingefahrenen Zustand umlaufend im Randbereich der Stirnwand 22 anliegt und hierdurch eine Grenzlinie 5 zwischen einem der Witterung ausgesetzten Nassbereich 4 und einem aufgrund der Dichtungseinrichtung 30 üblicherweise trocken bleibenden Trockenbereich 6 definiert. Beim Ausfahren des Ausfahrkastens 20 dichtet die Dichtungseinrichtung 30 mit den Ausfahrkasten 20 oben, unten und die seitlich begrenzenden Seitenwänden 24 ab. Wird der Ausfahrkasten 20 wieder eingefahren, so wird auf diesen Flächen verbliebene Flüssigkeit mittels der Dichtungseinrichtung 30 abgestreift.

Zum Zwecke des Ausfahrens und Einfahrens des Ausfahrkastens 20 sind links und rechts am Ausfahrkasten 20 Scherenbeschläge 60 vorgesehen, von denen in Fig. 5 und 6 nur einer auf der rechten Seite des Ausfahrkastens 20 dargestellt ist. Die Scherenbeschläge 60 weisen als Hauptkomponenten zwei Befestigungsabschnitte 62, 64 auf, die miteinander über im Weiteren noch beschriebene Schwenkhebel 72, 74 verbunden sind und die durch Vergrößerung des Winkels zwischen diesen Schwenkhebeln 72, 74 voneinander beabstandet und durch Verkleinern des Winkels aneinander angenähert werden können. Einer dieser Befestigungsabschnitte, der Befestigungsabschnitt 62, ist an der Innenseite des ortsfesten Wandabschnittes 122 befestigt, beispielsweise dort verschraubt. Der andere Befestigungsabschnitt 64 ist an einem umlaufenden rückwärtigen Flanschabschnitt 26 des Ausfahrkastens 20 vorgesehen.

Durch diese Anordnung der Befestigungsabschnitte 62, 64 an der Innenseite des ortsfesten Wandabschnittes 122 und dem rückwärtigen Ende des Ausfahrkastens 20 ergibt sich, dass eine Annäherung der Befestigungsabschnitte 62, 64 ein Ausfahren des Ausfahrkastens in Ausfahrrichtung 2 verursacht, während eine Beabstandung der Befestigungsabschnitte 62, 64 ein Einfahren verursacht.

Weiterhin weist der Scherenbeschlag 60 eine Begrenzungseinrichtung 90 auf, die dem Zweck dient, den Maximalabstand der Befestigungsabschnitte 62, 64 im Normalbetrieb zu definieren. Diese Begrenzungseinrichtung 90 verfügt über zwei getrennte Begrenzungsbänder 92.

Das untere Begrenzungsband 92 ist endseitig am Befestigungsabschnitt 64 befestigt, verläuft horizontal zum gegenüberliegenden Befestigungsabschnitt 62 und ist dort mittels einer Umlenkrolle 93 umgelenkt. Es verläuft weiter entlang des Schwenkhebels 72 und ist in etwa im Bereich eines Bolzens 73 zwischen den Schwenkhebeln 72, 74 an einem freien Ende einer Schraubenzugfeder 94 befestigt. Diese ist mit dem anderen Ende im Bereich einer Schwenkachse am Ende des Schwenkhebels 72 befestigt.

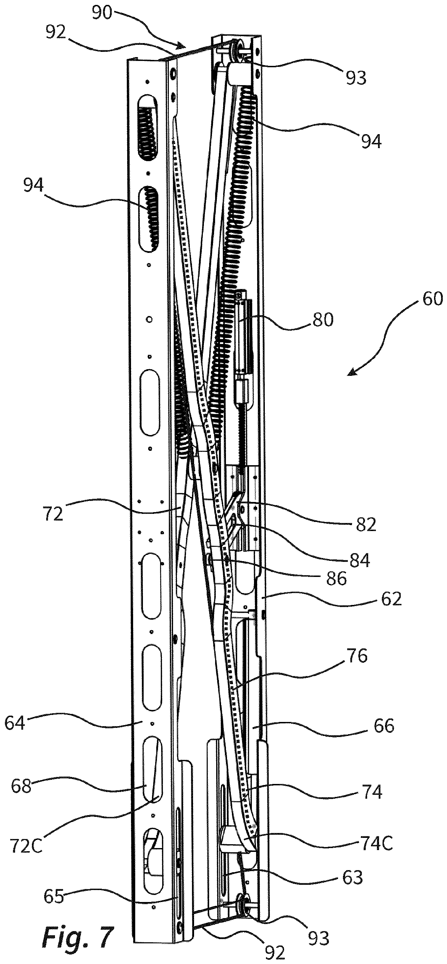

Das obere Begrenzungsband 92 ist ebenfalls endseitig am Befestigungsabschnitt 64 befestigt, allerdings an dessen oberen Ende. Es verläuft ebenfalls horizontal zum gegenüberliegenden Befestigungsabschnitt 62, ist dort ebenfalls mittels einer Umlenkrolle 93 umgelenkt und dann am freien Ende einer zweiten Schraubenzugfeder 94 angebracht. Diese zweite Schraubenzugfeder 94 ist mit dem gegenüberliegenden Ende am Bolzen 73 angebracht. In Fig. 7 sind nochmals die Details des Scherenbeschlages 60 zu erkennen.

Die beiden Schwenkhebel 72, 74 sind jeweils im Bereich eines ersten Endes 72A, 74A rein schwenkbeweglich an den in Art offener Profile gestalteten Befestigungsabschnitten 62, 64 angelenkt und miteinander über den Bolzen 73 schwenkbar verbunden. Das jeweils gegenüberliegende Ende 72C, 74C ist mittels Bolzen in Langlöchern 63, 65 translativ lineargeführt. Durch Verlagerung dieser Enden 72C, 74C kann der Winkel derSchwenkhebel72, 74zueinander verändert werden und hierdurch mittelbar der Abstand zwischen den Befestigungsabschnitten 62, 64 gesteuert werden.

Um dies zu erreichen, sind an beiden Befestigungsabschnitten 62, 64Aktoren 66, 68 vorgesehen, die vorliegend als Hydraulikzylinder ausgebildet sind, deren Hydraulikkolben auf die Enden 72C, 74C der Schwenkhebel 72, 74 wirken und diese dadurch bidirektional verlagern können. Der am Ausfahrkasten vorgesehene Befestigungsabschnitt 64 ist dabei mittels einer Hydraulikleitung 76 an ein Hydrauliksystem des jeweiligen Fahrzeugs angeschlossen, die entlang des Schwenkhebel 72 geführt ist. Dieser Schwenkhebel 72 oder vorzugsweise beide Schwenkhebel 72,74 sind vorzugsweise als Hohlprofile ausgebildet, um Hydraulikleitungen oder andere Versorgungsleitungen aufnehmen zu können. Auch elektrische Leitungen zur Versorgung von Verbrauchern im Ausfahrkasten 20 können hier alternativ oder zusätzlich verlegt sein.

Die genannten Aktoren 66, 68 stellen die Hauptaktoren dar, welche während des gesamten Verfahrweges Verwendu ngfinden. Zusätzlich weist der Scherenbeschlag 60 einen Startaktor 80 auf, der vorzugsweise ebenfalls als hydraulischer Aktor ausgebildet ist und eine Zahnstange verlagert, die auf eine schwenkbar an einem Befestigungsabschnitt angebrachte Führungshülse 82 wirkt. Diese Führungshülse 82 weist eine einseitig offene Führung 84 auf, die phasenweise mit einem Führungsgleiter 86 an einem der Schwenkhebel zusammenwirkt. Durch Ausfahren oder Einfahren des Startaktors 80 kann die Führungshülse 82 und mit ihr die Führung verschwenkt werden, um eine Kraft auf den Führungsgleiter 86 und somit den Schwenkhebel 72 auszuüben. Dies erleichtert die erste Phase einer die Befestigungsabschnitte 62, 64 beabstandenden Bewegung. In dieser ersten Phase sind die Schwenkhebel 72, 74 nahezu parallel zur Haupterstreckungsrichtung der Befestigungsabschnitte 62, 64 angeordnet, so dass durch die Hauptaktoren 66, 68 sehr hohe Kräfte aufgebracht werden müssten, um die Bewegung alleine in Gang zu setzen. In dieser Phase hilft der Startaktor mit seiner schwenkbaren Führung 84 und drückt den Führungsgleiter 86 vom Befestigungsabschnitt 64 weg. Durch die offene Gestaltung der Führung 84 entweicht der Führungsgleiter 86 im Laufe der Beabstandung und verharrt in dieser Position, bis beim späteren Wiedereinfahren des Ausfahrkastens 20 der Führungsgleiter 86 wieder in die Führung 84 eintritt.

Die schon beschriebene Begrenzungseinrichtung 90 sorgt dafür, dass ein Maximalabstand der Befestigungsabschnitte 62, 64 im Normalbetrieb definiert ist. Die Begrenzungsbänder92 können gegen die Kraft ihrer jeweiligen Schraubenzugfedern 94 nur begrenzt aus der Flucht der jeweiligen Schwenkhebel 72, 74 herausgezogen werden, bis eine am Begrenzungsband vorgesehener Anschlag, beispielsweise in Form einer Verdickung, einem weiteren Ausziehen entgegensteht. Die Befestigungsabschnitte 62, 64 können dadurch nicht beliebig voneinander entfernt werden. Die Federn 94 bewirkt zudem, dass bei der Annäherung der Befestigungsabschnitte 62, 64 das Begrenzungsband 92 eine definierte Position einnimmt.

Statt zweier Begrenzungsbänder 92 ist auch ein Beschlag mit nur einem Begrenzungsband 92 denkbar. In einem solchen Falle ist dieses vorzugsweise vertikal mittig vorgesehen. Die Begrenzungsbänder verfügen vorzugsweise an einem Ende über einen Haken, der ein werkzeugloses aushängen der Begrenzungsbänder zu Wartungszwecken gestattet.

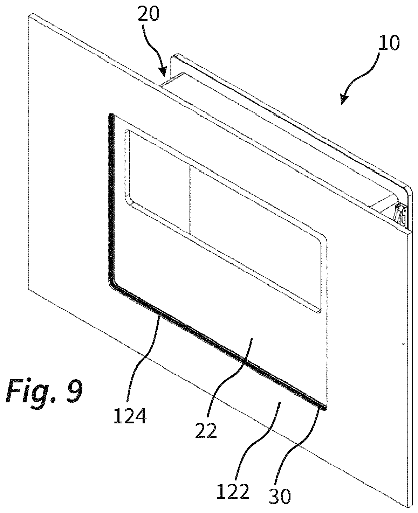

In nicht näher dargestellter Weise ist vorzugsweise vorgesehen, dass die Begrenzungsbänder 92 an mindestens einem der Enden mit einem werkzeuglos lösbaren Kopplungsmittel zur Anbindung an den jeweiligen Befestigungsabschnitt oder die jeweilige Schraubenfeder 94 ausgestattet sind. Dies gestattet es, zu Wartungszwecken das Begrenzungsband 92 bzw. die Begrenzungsbänder92 unkompliziert auszuhängen, um den Ausfahrkasten 20 über seine Staustellung hinaus weiter einzufahren. Dies wird nachfolgend im Kontext der Fig. 9 nochmals erläutert.

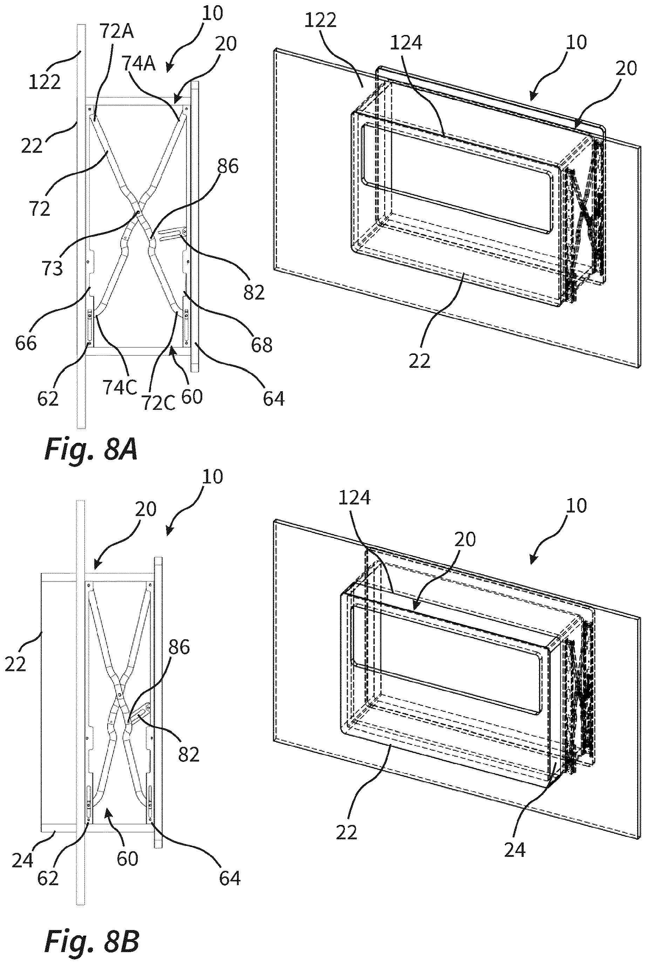

Die Fig. 8A bis 8C verdeutlichen nochmals einen vollständigen Ausfahrvorgang. Der Scherenbeschlag 60 ist dabei vereinfacht dargestellt. Es handelt sich jedoch um den gleichen Scherenbeschlag60, der auch in den Fig. 5 bis 7 dargestellt ist.

In Fig. 8A ist die Staustellung des Ausfahrkastens 20 gezeigt. Die Stirnwand 22 des Ausfahrkastens 20 ist in dieser Stellungfluchtend mit dem ortsfesten Wandabschnitt 122 der Außenwand 120 angeordnet. Diese Stellung des Ausfahrkastens wird insbesondere verwendet, wenn das Fahrzeug als Ganzes bewegt wird. Wie sich der Fig. 8A ersehen lässt, sind die Befestigungsabschnitte 62, 64 vergleichsweise weit voneinander beabstandet. Die Hauptaktoren 66, 68 sind entsprechend maximal eingefahren. Der Führungsgleiter86 ist nicht innerhalb der Führung 84 der Führungshülse 82 angeordnet. Ausgehend von diesem Zustand werden die Hauptaktoren 66, 68 mit Hydraulikdruck beaufschlagt, welcher durch eine Hydraulikpumpe zur Verfügung gestellt wird. Exemplarisch sei hierzu auf Fig. 2 verwiesen, in der die Hydraulikpumpe 50 in einem Unterboden des Wohnmobils 102 dargestellt ist. Durch diese Druckbeaufschlagungwerden die translativ verlagerbaren Enden 74C, 72C, bezogen auf Fig. 8A, nach unten gedrückt, wodurch mittelbar eine Annäherung der Befestigungsabschnitte 62, 64 und ein Ausfahren des Ausfahrkastens 20 bewirkt wird.

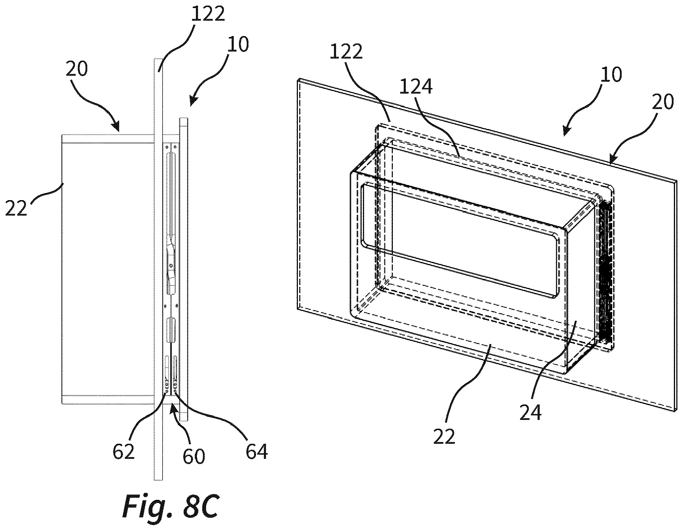

Ist der Zustand der Fig. 8B erreicht, so tritt der Führungsgleiter 86 in die Führung 84 ein. Ab diesem Zeitpunkt wirkt der Startaktor beim Ausfahren des Ausfahrkastens 20 mit, indem die Führungshülse 82 verschwenkt wird und der Schwenkhebel 74 an den Befestigungsabschnitt 62 angezogen wird. Hierdurch lässtsich der maximal komprimierte Zustand des Scherenbeschlages 60 herstellen, der in Fig. 8C dargestellt ist. Hier sind nun die Befestigungsabschnitte 62, 64 nahezu in Anlage aneinander. Ein weiteres Herausfahren des Ausfahrkastens 20 ist nicht möglich. Der Ausfahrkasten 20 hat somit seine maximale Ausfahrweite erreicht. Durch die in Fig. 8C nicht mehrzu erkennende Führungshülse ist dieser Zustand gesichert. Selbst wenn Kräfte auf den Ausfahrkasten wirken, sind diese nicht in der Lage, den Kasten einzudrücken, da die Führungshülse 82 dies verhindert.

Wird ausgehend vom Zustand der Fig. 8C der Ausfahrkasten 20 wieder eingefahren, so erfolgt dies zunächst primär durch die Kraftwirkung des Startaktors 80, bis die Winkelverhältnisse ausreichend gutsind, dass die Hauptaktoren 66, 68 die Bewegung in Richtung des Zustands der Fig. 8A fortsetzen können.

Eine Bewegung des Ausfahrkastens über die Stellung der Fig. 8A hinaus nach innen wird durch die Begrenzungseinrichtung 90 unterbunden, da in dieser Stellung das Begrenzungsband 92 gespannt ist.

Fig. 9 zeigt einen Wartungszustand des Ausfahrmoduls 10. In diesem Wartungszustand ist der Ausfahrkasten 20 so weit in den Innenraum hineinverlagert, dass die Dichtungseinrichtung 30 gut zugänglich ist. Dies ist trotz der Begrenzungseinrichtung 90 möglich, da diese durch Aushaken der erwähnten Haken deaktiviert werden kann. Nachdem die Befestigungseinrichtung derart deaktiviert ist und die Stellungder Fig. 9 eingenommen wurde, kann die Dichtungseinrichtung30 ohne Schwierigkeiten entfernt und gegen eine neue Dichtungseinrichtung ausgetauscht werden, welche dann weiterhin gewährleistet, dass der Scherenbeschlag 60 im Trockenbereich 6 vor Umwelteinflüssen gut geschützt ist.

## Patentansprüche

1. Ausfahrmodul (10) zur Vergrößerung eines Innenraums (110) eines Fahrzeugs durch partielle Verlagerung einer den Innenraum (110) begrenzenden Außenwand (120) mit den folgenden Merkmalen:
a. das Ausfahrmodul (10) umfasst einen Ausfahrkasten (20), der eine Stirnwand (22) und vier Seitenwände (24) aufweist, wobei die Stirnwand (22) einen verlagerbaren Wandabschnitt (22) der Außenwand (120) bildet und zur Anordnung in einer Aussparung (124) eines ortsfesten Wandabschnitts (122) der Außenwand (120) vorgesehen ist, und
b. der Ausfahrkasten (20) ist mittels eines Ausfahrsystems (40) in einer Ausfahrrichtung (2) zwischen einer Staustellung und einer Nutzstellung verlagerbar,
- wobei in der Staustellung der verlagerbare Wandabschnitt (22) mit dem ortsfesten Wandabschnitt (122) eine im Wesentlichen bündige Fläche bildet und die Seitenwände (24) im Innenraum (110) angeordnet sind und
- wobei in der Nutzstellung der verlagerbare Wandabschnitt (22) in Ausfahrrichtung (2) gegenüber dem ortsfesten Wandabschnitt (122) ausgefahren ist und die Seitenwände (24) einen Teil der Außenwand bilden,
c. das Ausfahrsystem (40) umfasst mindestens einen in einem Innenbereich angeordneten Scherenbeschlag (60) mit einem ersten Befestigungsabschnitt (62) zur Anbringung am Ausfahrkasten (20) und einem gegenüberliegenden zweiten Befestigungsabschnitt (64) zur Anbringung ortsfest zum ortsfesten Wandabschnitt (122) der Außenwand (120), und
d. der Scherenbeschlag (60) umfasst zwei gelenkig miteinander verbundene Schwenkhebel (72, 74), die jeweils mit einem Ende schwenkbar an einem der Befestigungsabschnitte (62, 64) angebracht sind und von denen mindestens ein Schwenkhebel (72, 74) mit seinem anderen Ende translativ am gegenüberliegenden Befestigungsabschnitt (64, 62) geführt ist, und
e. der mindestens eine Scherenbeschlag (60) ist zwischen einer Innenseite des ortsfesten Wandabschnitts (122) einerseits und dem Ausfahrkasten (20) andererseits angeordnet, so dass der Ausfahrkasten (20) durch eine die Befestigungsabschnitte (62, 64) aufeinanderzu kraftbeaufschlagende Kraft in sein Nutzstellung überführbar ist,
f. der Scherenbeschlag (60) weist mindestens einen Hauptaktor (66, 68) auf, der auf mindestens ein translativ geführtes Ende (72C, 74C) mindestens eines Schwenkhebels wirkt,
**gekennzeichnet durch** die folgenden weiteren Merkmale:
g. der Scherenbeschlag (60) weist zusätzlich mindestens einen Startaktor (80) auf, der auf mindestens einen der Schwenkhebel (72, 74) derart wirken kann, dass die Befestigungsabschnitte voneinanderweg kraftbeaufschlagt werden, und
h. der Startaktor (80) ist für bidirektionalen Betrieb ausgelegt, so dass der Startaktor (80) auf den mindestens einen der Schwenkhebel (72, 74) derart wirken kann, dass die Befestigungsabschnitte (62, 64) aneinander angezogen werden

2. Ausfahrmodul nach Anspruch 1 mit den folgenden weiteren Merkmalen:
a. das Ausfahrmodul (10) umfasst eine umlaufende Dichtungseinrichtung (30) zur Anbringung an der Aussparung (124) und zur gleitenden Anlage an den Seitenwänden (24) des Ausfahrkastens (20), wobei die Dichtungseinrichtung (30) einen außenliegenden Nassbereich (4) und einen innenliegende Trockenbereich (6) voneinander trennt, und
b. die Befestigungsabschnitte sowie die Schwenkhebel des mindestens einen Scherenbeschlages sind vollständig im Trockenbereich vorgesehen.

3. Ausfahrmodul nach Anspruch 1 oder 2 mit dem folgenden weiteren Merkmal:
a. beide Schwenkhebel des Scherenbeschlags sind jeweils mit einem Ende an einem der Befestigungsabschnitte schwenkbar angebracht und mit ihrem jeweils anderen Ende translativ am gegenüberliegenden Befestigungsabschnitt geführt.

4. Ausfahrmodul (10) nach einem der vorstehenden Ansprüche mit mindestens einem der folgenden weiteren Merkmal:
b. der Scherenbeschlag (60) weist zwei Hauptaktoren (66, 68) auf, die jeweils auf ein Ende (72C, 74C) jeweils eines Schwenkhebels (72, 74) wirken, wobei vorzugsweise für einen der Hauptaktoren (68) mindestens eine Versorgungsleitung (76) entlang eines der Schwenkhebel (72) oder in einem der Schwenkhebel (72) geführt ist, der hierfür zu mindest abschnittsweise als Hohlprofil ausgebildet ist, und/oder
c. der Hauptaktor (66, 68) ist bzw. die Hauptaktoren (66, 68) sind als hydraulischer Aktor ausgebildet, insbesondere als Hydraulikzylinder.

5. Ausfahrmodul (10) nach einem der vorstehenden Ansprüche mit mindestens einem der folgenden weiteren Merkmal:
b. der Startaktor (80) wirkt auf beide Schwenkhebel (72, 74) gemeinsam im Mittelbereich der Schwenkhebel, und/oder
c. der Startaktor (80) ist mit einer schwenkbeweglichen Führungshülse (82) wirkverbunden, die eine Führung (84) aufweist, in der mindestens ein Schwenkhebel (72, 74) temporär geführt ist, bis er bestimmungsgemäß bei der Beabstandung der Befestigungsabschnitte (62, 64) aus der Führung entweicht.

6. Ausfahrmodul (10) nach einem der vorstehenden Ansprüche mit dem folgenden weiteren Merkmal:
a. es sind mindestens zwei Scherenbeschläge (60) vorgesehen, die außenseitig an einander gegenüberliegender Seitenwänden (24) des Ausfahrkastens (20) angeordnet sind,
vorzugsweise mit dem zusätzlichen Merkmal:
b. es sind mindestens zwei Scherenbeschläge (60) links und rechts des Ausfahrkastens (20) vorgesehen.

7. Ausfahrmodul (10) nach einem der vorstehenden Ansprüche mit dem folgenden weiteren Merkmal:
a. es ist eine Begrenzungseinrichtung (90) vorgesehen, mittels derer eine maximale Betriebsbeabstandung der Befestigungsabschnitte (62, 64) definierbar ist,
insbesondere mit dem folgenden zusätzlichen Merkmal:
b. die Begrenzungseinrichtung (90) ist lösbar ausgebildet, um zum Zwecke der Wartung und/oder Reparatureine Überschreitungder maximalen Betriebsbeabstandungzu ermöglichen.

8. Ausfahrmodul (10) nach Anspruch 7 mit dem folgenden weiteren Merkmal:
a. die Begrenzungseinrichtung (90) weist ein flexibles Begrenzungsband (92) auf, welches vorzugsweise die Befestigungsabschnitte (62, 64) miteinander verbindet,
vorzugsweise mit mindestens einem der folgenden zusätzlichen Merkmale:
b. es ist mindestens eine Federeinrichtung, insbesondere umfassend eine Schraubenzugfeder, vorgesehen, mittels derer das Begrenzungsband (92) kraftbeaufschlagt wird, wobei die Feder vorzugsweise in Richtung der Haupterstreckungsrichtung eines Befestigungsabschnitts (62, 64) oder in Richtung der Erstreckungsrichtung eines Schwenkhebels (72, 74) ausgerichtet ist, und/oder
c. an mindestens einem Befestigungsabschnitt (62, 64) ist das Begrenzungsband (92) lösbar, insbesondere werkzeuglos lösbar, angebracht.

9. Ausfahrmodul (10) nach einem der vorstehenden Ansprüche mit mindestens einem der folgenden zusätzlichen Merkmale:
a. der Ausfahrkasten (20) weist, bezogen auf einen installierten Zustand, eine Höhe von mindestens 1,50 m und/oder eine Höhe von maximal 2,50 m auf, und/oder
b. die Stirnwand (22) des Ausfahrkastens (20) weist eine Breite von mindestens 1,00 m und/der eine Breite von maximal 5,00 m auf, und/oder
c. die Stirnwand (22) des Ausfahrkastens (20) ist zwischen der Staustellung der Nutzstellung um mindestens 0,2 m verfahrbar und/oder um maximal 1,50 m verfahrbar, und/oder
d. es ist eine Führungseinrichtung vorgesehen, insbesondere eine Rollenführungseinrichtung, mittels derer der Ausfahrkasten gegenüber dem ortsfesten Wandabschnitt der Außenwand geführt verlagerbar ist.

10. Fahrzeug (100) mit einem Innenraum mit variablem Volumen mit dem folgenden Merkmal:
a. das Fahrzeug (100) verfügt über einen Innenraum (110), der vorzugsweise als Wohnraum ausgestaltet ist,
**gekennzeichnet durch** das folgende weitere Merkmal:
b. das Fahrzeug (100) verfügt über ein Ausfahrmodul (10) nach einem der vorstehenden Ansprüche.

11. Fahrzeug (100) nach Anspruch 10 mit einem der folgenden zusätzlichen Merkmale:
a. ein Innenbereich des Ausfahrkastens (20) desAusfahrmoduls (10) ist mit mindestens einem Küchengerät ausgestattet, oder
b. ein Innenbereich des Ausfahrkastens (20) des Ausfahrmoduls (10) ist mit mindestens einem Sitzmöbelstück und/oder Liegemöbelstück ausgestattet.

12. Fahrzeug (100) nach Anspruch 10 oder 11 mit dem folgenden zusätzlichen Merkmal:
a. ein Aktor (66, 80) des Scherenbeschlages (60) ist als hydraulischer Aktor ausgebildet,
vorzugsweise mit dem folgenden zusätzlichen Merkmal:
b. eine Hydraulikpumpe (50) zur Versorgung des Aktors (66, 68) ist unterhalb eines Bodens des Innenraums (110) angeordnet.

13. Fahrzeug (100) nach einem der Ansprüche 10 bis 12 mit einem derfolgenden zusätzlichen Merkmale:
a. das Fahrzeug (100) ist als Caravan-Anhänger (101) ausgebildet, oder
b. das Fahrzeug (100) ist als Wohnmobil (102) ausgebildet, oder
c. das Fahrzeug (100) ist als Lastkraftwagen oder Zugmaschine (103) eines Sattelschleppers ausgebildet, oder
d. das Fahrzeug (100) ist als Boot (104) ausgebildet, insbesondere als Hausboot.

14. Fahrzeug (100) nach einem der Ansprüche 10 bis 13 mit einem derfolgenden zusätzlichen Merkmale:
a. der Wandabschnitt (122), in dem die Aussparung (124) für den Ausfahrkasten (20) vorgesehen ist, ist eine vertikal ausgerichtete Wand, wobei der Ausfahrkasten (20) horizontal verlagerbar ist, oder
b. der Wandabschnitt, in dem die Aussparung für den Ausfahrkasten vorgesehen ist, ist eine horizontal ausgerichtete Wand, wobei der Ausfahrkasten vertikal verlagerbar ist.

## Claims

1. Extension module (10) for enlarging an interior (110) of a vehicle by partially shifting an outer wall (120) delimiting the interior (110), having the following features:
a. the extension module (10) comprises an extension box (20), which has an end wall (22) and four side walls (24), wherein the end wall (22) forms a shiftable wall portion (22) of the outer wall (120) and is provided for arrangement in a cutout (124) in a positionally fixed wall portion (122) of the outer wall (120), and
b. the extension box (20) is shiftable in an extension direction (2) between a storage position and a use position by means of an extension system (40),
- wherein, in the storage position, the shiftable wall portion (22) together with the positionally fixed wall portion (122) forms a substantially flush surface and the side walls (24) are arranged in the interior (110), and
- wherein, in the use position, the shiftable wall portion (22) is extended in the extension direction (2) in relation to the positionally fixed wall portion (122) and the side walls (24) form part of the outer wall,
c. the extension system (40) comprises at least one scissors fitting (60) which is arranged in an inner region and has a first fastening portion (62) for attaching to the extension box (20) and has an opposite second fastening portion (64) for attaching in a fixed position to the positionally fixed wall portion (122) of the outer wall (120), and
d. the scissors fitting (60) comprises two pivot levers (72, 74) which are connected in an articulated manner to each other and which are each attached pivotably at one end to one of the fastening portions (62, 64) and of which at least one pivot lever (72, 74) is guided at its other end in translation on the opposite fastening portion (64, 62), and
e. the at least one scissors fitting (60) is arranged between an inner side of the positionally fixed wall portion (122), on the one hand, and the extension box (20), on the other hand, and therefore the extension box (20) can be transferred into its use position by means of a force loading the fastening portions (62, 64) towards each other,
f. the scissors fitting (60) has at least one main actuator (66, 68) which acts on at least one end (72C, 74C), which is guided in translation, of at least one pivot lever,
**characterized by** the following further features:
g. the scissors fitting (60) additionally has at least one starting actuator (80) which can act upon at least one of the pivot levers (72, 74) in such a manner that the fastening portions are subjected to a force in a direction away from one another, and
h. the starting actuator (80) is designed for bidirectional operation, and therefore the starting actuator (80) can act upon the at least one of the pivot levers (72, 74) in such a manner that the fastening portions (62, 64) are pulled towards each other.

2. Extension module according to Claim 1, having the following further features:
a. the extension module (10) comprises a peripheral sealing device (30) for attaching to the cutout (124) and for sliding contact with the side walls (24) of the extension box (20), wherein the sealing device (30) separates an outer wet region (4) and an inner dry region (6) from each other, and
b. the fastening portions and the pivot levers of the at least one scissors fitting are provided entirely in the dry region.

3. Extension module according to Claim 1 or 2, having the following further feature:
a. the two pivot levers of the scissors fitting are each attached pivotably at one end to one of the fastening portions and at their respective other end are guided in translation on the opposite fastening portion.

4. Extension module (10) according to one of the preceding claims, having at least one of the following further features:
b. the scissors fitting (60) has two main actuators (66, 68) which each act upon one end (72C, 74C) of in each case one pivot lever (72, 74), wherein preferably for one of the main actuators (68) at least one supply line (76) is guided along one of the pivot levers (72) or in one of the pivot levers (72) which is designed for this purpose at least partially as a hollow profile, and/or
c. the main actuator (66, 68) or the main actuators (66, 68) is or are designed as hydraulic actuators, in particular as hydraulic cylinders.

5. Extension module (10) according to one of the preceding claims, having at least one of the following further features:
b. the starting actuator (80) acts upon both pivot levers (72, 74) jointly in the central region of the pivot levers, and/or
c. the starting actuator (80) is operatively connected to a pivotable guide sleeve (82) which has a guide (84) in which at least one pivot lever (72, 74) is temporarily guided until it leaves the guide as intended when the fastening portions (62, 64) are spaced apart.

6. Extension module (10) according to one of the preceding claims, having the following further feature:
a. at least two scissors fittings (60) are provided which are arranged on the outer side of mutually opposite side walls (24) of the extension box (20),
preferably having the additional feature:
b. at least two scissors fittings (60) are provided on the left and on the right of the extension box (20).

7. Extension module (10) according to one of the preceding claims, having the following further feature:
a. a limiting device (90) is provided, by means of which a maximum operational spacing of the fastening portions (62, 64) can be defined,
in particular having the following additional feature:
b. the limiting device (90) is designed to be releasable in order to permit the maximum operational spacing to be exceeded for the purpose of maintenance and/or repair.

8. Extension module (10) according to Claim 7, having the following further feature:
a. the limiting device (90) has a flexible limiting band (92) which preferably connects the fastening portions (62, 64) to each other,
preferably having at least one of the following additional features:
b. at least one the spring device is provided, in particular comprising a helical tension spring, by means of which the limiting band (92) is force-loaded, wherein the spring is preferably oriented in the direction of the main direction of extent of a fastening portion (62, 64) or in the direction of the direction of extent of a pivot lever (72, 74), and/or
c. the fastening band (92) is attached releasably, in particular releasably without a tool, to at least one fastening portion (62, 64).

9. Extension module (10) according to one of the preceding claims, having at least one of the following additional features:
a. the extension box (20) has a height of at least 1.50 m and/or a height of at maximum 2.50 m, with reference to an installed state, and/or
b. the end wall (22) of the extension box (20) has a width of at least 1.00 m and/or a width of at maximum 5.00 m, and/or
c. the end wall (22) of the extension box (20) is movable by at least 0.2 m and/or is movable by at maximum 1.50 m between the stowage position and the use position, and/or
d. a guide device is provided, in particular a roller guide device, by means of which the extension box can be shifted in a guided manner in relation to the positionally fixed wall portion of the outer wall.

10. Vehicle (100) with an interior having a variable volume, having the following feature:
a. the vehicle (100) has an interior (110) which is preferably designed as a living space,
**characterized by** the following further feature:
b. the vehicle (100) has an extension module (10) according to one of the preceding claims.

11. Vehicle (100) according to Claim 10, having one of the following additional features:
a. an inner region of the extension box (20) of the extension module (10) is equipped with at least one kitchen appliance, or
a. an inner region of the extension box (20) of the extension module (10) is equipped with at least one item of seating furniture and/or item of reclining furniture.

12. Vehicle (100) according to Claim 10 or 11, having the following additional feature:
a. an actuator (66, 80) of the scissors fitting (60) is designed as a hydraulic actuator,
preferably having the following additional feature:
b. a hydraulic pump (50) for supplying the actuator (66, 68) is arranged below a floor of the interior (110).

13. Vehicle (100) according to one of Claims 10 to 12, having one of the following additional features:
a. the vehicle (100) is designed as a caravan trailer (101), or
b. the vehicle (100) is designed as a motorhome(102), or
c. the vehicle (100) is designed as a lorry or tractor (103) of an articulated lorry, or
d. the vehicle (100) is designed as a boat (104), in particular as a houseboat.

14. Vehicle (100) according to one of Claims 10 to 13, having one of the following additional features:
a. the wall portion (122) in which the cutout (124) for the extension box (20) is provided is a vertically oriented wall, with the extension box (20) being able to be shifted horizontally, or
b. the wall portion in which the cutout for the extension box is provided is a horizontally oriented wall, with the extension box being able to be shifted vertically.

## Revendications

1. Module d'extension (10) pour agrandir un espace intérieur (110) d'un véhicule par déplacement partiel d'une paroi extérieure (120) délimitant l'espace intérieur (110), présentant les caractéristiques suivantes :
a. le module d'extension (10) comprend un caisson d'extension (20) qui présente une paroi frontale (22) et quatre parois latérales (24), la paroi frontale (22) formant une section de paroi déplaçable (22) de la paroi extérieure (120) et étant prévue pour être agencée dans un évidement (124) d'une section de paroi fixe (122) de la paroi extérieure (120), et
b. le caisson d'extension (20) est apte à être déplacé dans une direction d'extension (2) entre une position de repliage et une position d'utilisation, au moyen d'un système de déploiement (40),
- dans la position de repliage, la section de paroi déplaçable (22) forme avec la section de paroi fixe (122) une surface essentiellement affleurante, et les parois latérales (24) sont agencées dans l'espace intérieur (110), et
- la section de paroi déplaçable (22) est, dans la position d'utilisation, déployée dans la direction d'extension (2) par rapport à la section de paroi fixe (122) et les parois latérales (24) forment une partie de la paroi extérieure,
c. le système de déploiement (40) comprend au moins une ferrure à ciseaux (60) agencée dans une zone intérieure, avec une première section de fixation (62) destinée à être montée sur le caisson d'extension (20) et une deuxième section de fixation (64) opposée, destinée à être montée de manière fixe par rapport à la section de paroi fixe (122) de la paroi extérieure (120), et
d. la ferrure à ciseaux (60) comprend deux leviers pivotants (72, 74) reliés entre eux de manière articulée, qui sont montés chacun, par une extrémité, de manière pivotante sur l'une des sections de fixation (62, 64), et dont au moins un levier pivotant (72, 74) est guidé en translation avec son autre extrémité sur la section de fixation (64, 62) opposée, et
e. ladite au moins une ferrure à ciseaux (60) est agencée entre un côté intérieur de la section de paroi fixe (122) d'une part et le caisson d'extension (20) d'autre part, de sorte que le caisson d'extension (20) est apte à être transféré dans sa position d'utilisation par une force sollicitant les sections de fixation (62, 64) l'une vers l'autre,
f. la ferrure à ciseaux (60) présente au moins un actionneur principal (66, 68) qui agit sur au moins une extrémité (72C, 74C) guidée en translation d'au moins un levier pivotant,
**caractérisé par** les caractéristiques supplémentaires suivantes :
g. la ferrure à ciseaux (60) présente en outre au moins un actionneur de démarrage (80) qui est apte à agir sur au moins l'un des leviers pivotants (72, 74) de telle sorte que les sections de fixation soient soumises à une force les unes par rapport aux autres, et
h. l'actionneur de démarrage (80) est conçu pour un fonctionnement bidirectionnel, de sorte que l'actionneur de démarrage (80) est apte à agir sur l'un au moins des leviers pivotants (72, 74) de telle sorte que les sections de fixation (62, 64) soient attirées l'une vers l'autre.

2. Module d'extension selon la revendication 1, ayant les caractéristiques supplémentaires suivantes :
a. le module d'extension (10) comprend un dispositif d'étanchéité périphérique (30) destiné à être monté sur l'évidement (124) et à s'appuyer de manière coulissante sur les parois latérales (24) du caisson d'extension (20), le dispositif d'étanchéité (30) séparant une zone humide extérieure (4) et une zone sèche intérieure (6), et
b. les sections de fixation ainsi que les leviers pivotants de ladite au moins une ferrure à ciseaux sont entièrement prévus dans la zone sèche.

3. Module d'extension selon la revendication 1 ou la revendication 2, ayant la caractéristique supplémentaire suivante :
a. les deux leviers pivotants de la ferrure à ciseaux sont chacun montés pivotants par une extrémité sur l'une des sections de fixation et guidés en translation par leur autre extrémité respective sur la section de fixation opposée.

4. Module d'extension (10) selon l'une des revendications précédentes, ayant au moins l'une des caractéristiques supplémentaires suivantes :
b. la ferrure à ciseaux (60) présente deux actionneurs principaux (66, 68) qui agissent chacun sur une extrémité (72C, 74C) d'un levier pivotant (72, 74) respectif, au moins une conduite d'alimentation (76) étant de préférence, pour l'un des actionneurs principaux (68), guidée le long de l'un des leviers pivotants (72) ou dans l'un des leviers pivotants (72), qui est réalisé à cet effet au moins partiellement sous forme de profilé creux, et/ou
c. l'actionneur principal (66, 68) ou les actionneurs principaux (66, 68) est/sont conçu(s) sous la forme d'actionneurs hydrauliques, en particulier sous la forme de vérins hydrauliques.

5. Module d'extension (10) selon l'une des revendications précédentes, ayant au moins l'une des caractéristiques supplémentaires suivantes :
b. l'actionneur de démarrage (80) agit sur les deux leviers pivotants (72, 74) conjointement, dans la zone centrale des leviers pivotants, et/ou
c. l'actionneur de démarrage (80) est relié fonctionnellement à une douille de guidage (82) mobile en pivotement, qui présente un guidage (84) dans lequel au moins un levier pivotant (72, 74) est guidé temporairement lors de l'écartement des sections de fixation (62, 64) jusqu'à ce que, en résultante de sa conception, il s'échappe du guide.

6. Module d'extension (10) selon l'une des revendications précédentes, ayant la caractéristique supplémentaire suivante :
a. il est prévu au moins deux ferrures à ciseaux (60) qui sont agencées du côté extérieur sur des parois latérales (24) opposées du caisson d'extension (20),
de préférence ayant la caractéristique supplémentaire :
b. il est prévu au moins deux ferrures à ciseaux (60) à gauche et à droite du caisson d'extension (20).

7. Module d'extension (10) selon l'une des revendications précédentes, ayant la caractéristique supplémentaire suivante :
a. il est prévu un dispositif de limitation (90) au moyen duquel un écart de fonctionnement maximal des sections de fixation (62, 64) peut être défini,
en particulier ayant la caractéristique supplémentaire suivante :
b. le dispositif de limitation (90) est conçu de manière amovible afin de permettre un dépassement de la distance de fonctionnement maximale à des fins de maintenance et/ou de réparation.

8. Module d'extension (10) selon la revendication 7, ayant la caractéristique supplémentaire suivante :
a. le dispositif de limitation (90) présente une bande de limitation flexible (92) qui relie de préférence les sections de fixation (62, 64) entre elles,
de préférence avec au moins une des caractéristiques supplémentaires suivantes :
b. il est prévu au moins un dispositif à ressort, comprenant notamment un ressort de traction hélicoïdal, au moyen duquel la bande de limitation (92) est soumise à une force, le ressort étant de préférence orienté dans la direction d'extension principale d'une section de fixation (62, 64) ou dans la direction d'extension d'un levier pivotant (72, 74), et/ou
c. la bande de limitation (92) est montée de manière amovible, en particulier de manière amovible sans outil, sur au moins une section de fixation (62, 64).

9. Module d'extension (10) selon l'une des revendications précédentes, ayant au moins l'une des caractéristiques supplémentaires suivantes :
a. le caisson d'extension (20) présente, par rapport à un état installé, une hauteur d'au moins 1,50 m et/ou une hauteur d'au plus 2,50 m, et/ou
b. la paroi frontale (22) du caisson d'extension (20) présente une largeur d'au moins 1,00 m et/ou une largeur de 5,00 m au maximum, et/ou
c. la paroi frontale (22) du caisson d'extension (20) est apte à être déplacée d'au moins 0,2 m et/ou de 1,50 m au maximum entre la position de repliage et la position d'utilisation, et/ou
d. il est prévu un dispositif de guidage, notamment un dispositif de guidage à rouleaux, au moyen duquel le caisson d'extension est apte à être déplacé de manière guidée par rapport à la section de paroi fixe de la paroi extérieure.

10. Véhicule (100) avec un espace intérieur à volume variable, ayant la caractéristique suivante :
a. le véhicule (100) dispose d'un espace intérieur (110) qui est de préférence aménagé en espace habitable,
**caractérisé par** la caractéristique supplémentaire suivante :
b. le véhicule (100) dispose d'un module d'extension (10) selon une des revendications précédentes.

11. Véhicule (100) selon la revendication 10, ayant l'une des caractéristiques supplémentaires suivantes :
a. une zone intérieure du caisson d'extension (20) du module d'extension (10) est équipée d'au moins un appareil de cuisine, ou
b. une zone intérieure du caisson d'extension (20) du module d'extension (10) est équipée d'au moins un meuble d'assise et/ou de couchage.

12. Véhicule (100) selon la revendication 10 ou la revendication 11, ayant la caractéristique supplémentaire suivante :
a. un actionneur (66, 80) de la ferrure à ciseaux (60) est conçu sous la forme d'un actionneur hydraulique,
de préférence ayant la caractéristique supplémentaire suivante :
b. une pompe hydraulique (50) destinée à alimenter l'actionneur (66, 68) est agencée en dessous d'un plancher de l'espace intérieur (110).

13. Véhicule (100) selon l'une des revendications 10 à 12, ayant l'une des caractéristiques supplémentaires suivantes :
a. le véhicule (100) est sous la forme d'une caravane à remorquer (101), ou
b. le véhicule (100) est sous la forme d'un camping-car (102), ou
c. le véhicule (100) est sous la forme d'un camion ou d'un tracteur (103) d'un semi-remorque, ou
d. le véhicule (100) est sous la forme d'un bateau (104), en particulier d'un bateau logeable.

14. Véhicule (100) selon l'une des revendications 10 à 13, ayant l'une des caractéristiques supplémentaires suivantes :
a. la section de paroi (122) dans laquelle est prévu l'évidement (124) pour le caisson d'extension (20) est une paroi orientée verticalement, le caisson d'extension (20) étant déplaçable horizontalement, ou
b. la section de paroi dans laquelle est prévu l'évidement pour le caisson d'extension est une paroi orientée horizontalement, le caisson d'extension étant déplaçable verticalement.
